# EUROPEAN PATENT APPLICATION

(11) **EP 2 765 078 A1**
(43) Date of publication of application: **13.08.2014**
(21) Application number: 14153681.3
(22) Date of filing: 03.02.2014
(51) Int. Cl.: B64C 1/14

(54) **Vehicle with a skin**

(30) Priority: 08.02.2013 DE 102013202084; 08.02.2013 US 201361762384 P
(71) Applicant: Airbus Operations GmbH, 21129 Hamburg (DE)
(72) Inventor: Paul, Carsten, 21441 Garstedt (DE)
(74) Representative: UEXKÜLL & STOLBERG

(57) **Abstract**

The present invention relates to a vehicle with a skin (5), which has a hole with a circumferential edge, and with a structure formed from a plurality of support elements (1, 3), on which structure the skin (5) is arranged, the first support element of the plurality of support elements having a first bearing surface (9) with a first and a second section, wherein the skin is arranged flat against the first section of the first bearing surface and wherein the circumferential edge runs at least in sections in the area of the first bearing surface, and that an integrally formed frame element is arranged against the second section of the first bearing surface and, in the area of the first bearing surface, is arranged against the skin.

## Description

The present invention relates to a vehicle with a skin, which has a hole with a circumferential edge, and with a structure formed from a plurality of support elements, on which structure the skin is arranged.

The bodies of various vehicles, in particular aeroplanes, are often formed from a structure or frame structure to which a skin is applied. The supporting elements of the frame structure or structure which run perpendicular to the direction of extent of the vehicle are called formers or transverse formers. The formers absorb the main load of the skin and stabilize its shape. Perpendicular to the formers and parallel to the direction of extent of the vehicle, the skin or shell of the vehicle is additionally supported by so-called stringers on which the skin is likewise arranged. The structure of the vehicle is additionally supported by solid longitudinal supports or longitudinal formers which likewise run in the direction of extent of the vehicle and thus perpendicular to the formers. The skin is also arranged flat against the longitudinal supports or longitudinal formers. Formers, stringers and longitudinal supports form the structure of the vehicle as a plurality of support elements.

The skin of a vehicle is not a complete surface, but has holes or openings at least in sections. Holes can be for example a cargo hatch or a passenger door in an aeroplane body. The holes in the skin are surrounded by a circumferential edge of the skin. The skin is often supported, close to the hole, by one or more support elements of the structure. For this, the skin is arranged flat against bearing surfaces of the support elements. The flat arrangement can consist in the fact that the skin rests directly against a bearing surface of a support element. However, it is also conceivable that further elements, such as for example a doubler, which provide a flat contact between the skin and the bearing surface are arranged between the bearing surface and the skin. In the area of the circumferential edge which runs around the hole, however, the skin is as a rule not arranged flat against bearing surfaces of support elements. The skin is free-standing. In particular when loading and unloading a vehicle, for example through cargo hatches or doors, the skin is therefore frequently damaged in the area of the circumferential edge when a hard object bumps against the circumferential edge during loading and unloading of the vehicle.

Until now, conventional skins of aeroplanes have as a rule been formed from aluminium or from other metals or metal alloys. If a hard object bumps against an edge of the skin during loading or unloading of the vehicle, this edge deforms plastically or visible cracks form. Either the damaged skin can be easily re-formed with a suitable tool or a piece of the skin has to be replaced. In each case, the damage or the circumference of the damage should be recognizable by visual inspection.

In modern aeroplane construction, recourse is increasingly being made to composite materials to produce the skin. Composite materials have several layers of different materials which are combined with each other. Examples of composite materials used in aeroplane construction and shipbuilding are fibreglass-reinforced plastic (FRP), carbon fibre reinforced plastic (CFRP) and glass fibre reinforced aluminium (GLARE). As a rule, composite materials do not deform plastically when damaged, and cannot easily be re-formed into their original shape again. Instead, cracks form or the skin delaminates. The extent of the cracks and the delaminated areas - often even their presence - is not recognizable from outside. Damage to composite materials therefore entails expensive investigations. In addition, the repair of the damage is disproportionately more expensive.

However, damage to the edges of the skin around the holes is unavoidable in the area of aeroplane doors for passengers or also of cargo hold hatches or cargo hold doors.

The object of the present invention is therefore to provide an arrangement with which damage to the skin can be prevented or else at least attenuated, and which allows any damage to be repaired easily.

The present invention solves this problem in that a first support element of the plurality of support elements has a first bearing surface with a first and a second section. The skin is arranged flat against the first section of the first bearing surface and the circumferential edge runs at least in sections in the area of the first bearing surface. Furthermore, an integrally formed frame element is arranged flat against the second section of the first bearing surface. The frame element is arranged against the skin in the area of the first bearing surface.

The integrally formed frame element or the integrally formed frame borders the skin towards the hole and serves as a protective frame. If an object bumps against the frame element during transport through the hole, only this frame element is damaged. If the frame element is formed from a suitable material, with the result that it only deforms elastically, it can be brought back into its original shape again with suitable tools. If cracks form in the frame element, these remain in the frame element and are not transferred to the skin. The skin itself is largely protected from damage.

A vehicle according to the invention, which is preferably an aircraft or aeroplane, has a structure which is formed from a plurality of support elements. A skin, which forms for example the shell of the vehicle, is arranged flat on the support elements. The skin can be composed of a plurality of flat segments or elements.

In addition, the structure is preferably arranged on a side of the skin facing towards an internal space enclosed by the skin.

The skin has at least one hole with a circumferential edge. This hole or opening can be formed for example in a single segment of the skin. However, it can be formed together in different elements or segments of the skin.

A first support element of the plurality of support elements, for example a former or a longitudinal support, has a first bearing surface with a first and a second section. The skin is arranged flat against the first section of the bearing surface. Conversely, it could also be said that the first section of the bearing surface is defined precisely by the area of the first bearing surface flat against which the skin is arranged. The integrally formed frame element is arranged flat against the second section of the first bearing surface. Here too, it could conversely be said that the second section of the first bearing surface is defined by the area at which the integrally formed frame element is arranged flat against the first bearing surface.

By a "flat arrangement" on the support elements is meant firstly that the skin or the frame element rests directly against the support element. Secondly, a "flat arrangement" within the meaning of the present invention is also present in the case of the interposition of a further element such as a doubler between support element and skin or frame element, in which the skin or the frame element rests flat against this element, which then in turn rests flat against the support element.

Furthermore, the frame element is arranged in the area of the first bearing surface of the skin and preferably flat against the circumferential edge. The circumferential edge runs at least in sections in the area of the first bearing surface. In other words, the joint between the skin and the frame element or the circumferential edge of the skin and the frame element runs at least in sections in the area of the first bearing surface.

In a preferred embodiment, the plurality of support elements comprises a second support element which is arranged at an angle to the first support element and has a bearing surface with a third and a fourth section. The skin is arranged flat against the third section. The circumferential edge runs at least in sections in the area of the second bearing surface. The circumferential edge runs in different directions in the area of the first bearing surface and of the second bearing surface. The frame element is arranged flat against the fourth section of the second bearing surface and is additionally arranged on the skin in the area of the second bearing surface. Between the first and the second bearing surface the frame element protrudes further into the hole than the first and the second bearing surface.

The circumferential edge does not follow the same straight line in the area of the first and the second bearing surface, but changes direction at least once. The circumferential edge is thus curved between the first and the second bearing surface or also in the area of the bearing surfaces and could, for example, represent a corner of the hole. In corners, the skin is subjected to particularly high internal stress. Cracks therefore form more quickly than in sections in which the circumferential edge runs straight. These cracks additionally proceed more quickly over large surface areas of the skin and can lead to extensive damage to the skin. Such damage can be prevented by a frame element or a frame which rests against the circumferential edge in the area of a corner of the hole. In a corner, the risk of a crack is particularly great even in the area of the frame. However, the crack is limited to the frame, i.e. it does not form beyond the frame into the skin. The skin is thus particularly well protected against the formation of cracks in vulnerable areas such as corners, in which the circumferential edge does not follow a straight line.

In a preferred embodiment, the frame element overhangs the first and/or the second bearing surface in a direction facing away from the circumferential edge. In other words, it is the frame element that forms the internal edge of the hole and not the first and/or the second support element. The frame element can thus deform in a direction perpendicular to the plane of the skin or to the plane of the hole, and protects not only the skin, but also the support elements arranged underneath it from damage.

In a further preferred embodiment, the frame element and the skin line up precisely with each other on the side facing away from the first and/or the second support element. Alternatively or likewise, the frame element and the skin preferably also line up precisely on the side facing the first and/or the second support element.

By lining up precisely is meant here that the frame element and the bordering skin form a surface between which no substantial difference in height is recognizable. Lining up precisely towards the outside of the vehicle, i.e. on the side of the skin facing away from the support elements, reduces the frictional resistance in the medium in which the vehicle moves. Lining up precisely towards the support structure makes it easier to produce the vehicle, as the frame element and the skin are arranged at equal distances or resting directly against the support element. In other words, no compensating elements, which compensate for any differences in thickness between the skin and the frame element, are necessary.

In a preferred embodiment, the frame element rests against the entire circumferential edge. The entire edge is thus protected from damage.

In a further preferred embodiment, a doubler is arranged between the first and/or the second bearing surface and the skin as well as between the first and/or the second bearing surface and the frame element. The doublers serve to increase the stability of the skin in the area of the hole and can be formed, depending on the stability requirements and on the material of the skin, for example of aluminium, titanium, steel, carbon fibre reinforced plastic (CFRP) or glass fibre reinforced aluminium (GLARE), wherein the doublers can be connected to the skin by adhesion or riveting.

The skin and the frame element preferably overlap in the area of the first or the second bearing surface. In other words, the joint between the skin and the frame element in the area of the circumferential edge is preferably not a butt joint, but a lap joint. In particular a lap joint prevents forces that act on the frame element from being transferred directly to the skin, as the frame element can also give way perpendicular to the surface of the skin in case of doubt. In this way, damage to the skin is prevented.

In a preferred embodiment, the thickness of the skin decreases in a direction facing onto the hole. It is even further preferred that a thickness of the frame element decreases in a direction facing away from the hole. In other words, a lap joint, which offers the particularly advantageous force-transmission possibilities already mentioned, is formed between the frame element and the skin.

It is further preferred that the skin is formed from a composite material. This has advantages in terms not only of strength but also of weight, which advantages are sufficiently known from the state of the art.

It is preferred that the composite material has a first and a second cover layer, between which a plurality of intermediate layers are arranged, and that the number of intermediate layers decreases in the direction facing onto the hole. In other words, the skin in the area of the edge is formed by fewer layers than in the areas which face away from the circumferential edge. The skin is thus advantageously thinned continuously or in steps in the direction onto the hole. This can be used, among other things, to construct a lap joint between skin and frame element. The first and second cover layers protect the core of the composite material from damage and the effects of weather, and run continuously up to the edge.

The frame element is preferably formed from a metal or from a metal alloy. Metals or metal alloys have the advantage that, in the case of impacts, they deform elastically as a rule and do not tend to form cracks. They can therefore often be re-formed mechanically into their original shape again at least in the case of minor damage.

In a preferred embodiment, the skin comprises carbon fibre reinforced plastic (CFRP) and the frame element is made of titanium. Titanium is very suitable, as a particularly tough material, for preventing damage to a skin made of a carbon fibre reinforced plastic and, unlike aluminium, does not result in a corrosive chemical reaction with the carbon fibre reinforced plastic.

In an alternative preferred embodiment, the skin comprises glass fibre reinforced aluminium (GLARE) and the frame element comprises aluminium. Aluminium is likewise elastically deformable and can be easily re-formed again, and additionally does not react with glass fibre reinforced aluminium.

The present invention is explained in the following on the basis of a schematic drawing representing a preferred embodiment. The drawing shows in
- Fig. 1: a section of an embodiment of a vehicle according to the invention,
- Fig. 2: a cross-section through the section of the embodiment of a vehicle according to the invention along the line A-A and
- Fig. 3: a cross-section through the section of the embodiment of a vehicle according to the invention along the line B-B.

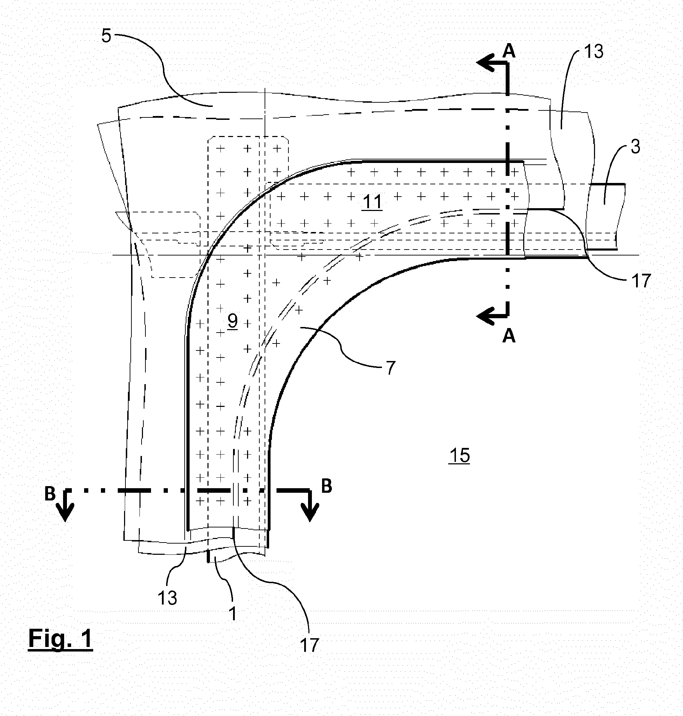

In Figures 1 to 3, a section of a vehicle according to the invention is shown in which the embodiment described here is an aeroplane. The vehicle has a structure made of a plurality of support elements 1, 3 with a first support element 1, shown here in the form of a former or transverse former, and a second support element 3 which forms an upper longitudinal support or a longitudinal former. The first support element 1 and the second support element 3 are arranged at right angles to each other. In other words, the first support element 1 extends perpendicular to a direction of extent of the vehicle and the second support element 3 extends parallel to the direction of extent of the vehicle. A skin 5 and an integrally formed frame element 7 are arranged on the structure.

Skin 5 and frame element 7 are arranged, in the area of a first bearing surface 9, flat against the first support element 1 and, in the area of a second bearing surface 11, flat against the second support element 3. The flat arrangement of the skin 5 or of the frame element 7 can consist in the fact that the elements rest directly against each other. However, it is also conceivable that a doubler 13 or also several layers provide a flat contact between the skin 5 or the frame element 7 and the support elements 1, 3 or the bearing surfaces 9, 11, as represented in the embodiment.

The term a "flat arrangement" thus also includes those arrangements in which the skin 5 or the frame element 7 rest flat against an element such as a doubler 13, which in turn rests flat against the frame element 7.

The skin 5 has a hole 15 which is surrounded by a circumferential edge 17. The area of the skin 5 with the hole 15 can be integrally formed. The skin 5 can alternatively also be composed of different segments or elements. The circumferential edge 17 then forms the boundary of the skin elements or segments with the hole 15. The skin 5 is arranged flat against the first bearing surface 9 in a first section 19 and arranged flat against the second bearing surface 11 of the second support element 3 in a third section 21. In the area of the first and of the third section 19, 21, a doubler 13 is arranged between the skin 5 and the support elements 1, 3. The circumferential edge 17 of the skin 5 thus runs at least in sections in the area of the first and of the second bearing surface 9, 11. The doublers 13 serve to increase the stability of the skin in the area of the hole 15.

The integrally formed frame element 7 is arranged flat against the first bearing surface 9 of the first support element 1 in a second section 23 and arranged flat against the second bearing surface 11 of the second support element 3 in a fourth section 25. The doubler 13 also provides a flat contact between the frame element 7 and the support elements 1, 3. In other words, the frame element rests flat against the doubler 13, which in turn rests flat against the first and the second bearing surface. The frame element 7 overhangs the first and the second bearing surface 9, 11 in a direction facing away from the circumferential edge 17. In other words, the frame element 7 protrudes further into the hole 15 than the bearing surfaces 9, 11 of the support elements 1, 3.

The hole 15 can be for example an opening for an aeroplane door in a passenger aeroplane or a cargo door in a passenger or cargo aeroplane. In the state of the art, the hole 15 is directly bordered by the circumferential edge 17. Objects which are moved through the hole 15 often bump against the circumferential edge 17 and damage it. The damage can be easily removed from skins 5 which elastically deform when bumped. Composite materials, however, do not deform elastically, but crack or delaminate. When using a frame element 7 according to the invention which borders the hole 15 towards the skin 5, the frame element 7 is damaged instead of the skin 5 in the case of a vehicle according to the invention. The frame element 7 can be produced from a metallic alloy or a metal, such as for example aluminium or titanium, with the result that it deforms elastically. Alternatively, the frame element 7 can be easily replaced and expensive repairs to the skin 5 are avoided.

The circumferential edge 17 runs in different directions in the area of the first bearing surface 9 and in the area of the second bearing surface 11. The circumferential edge 17 is curved between the first and the second bearing surface 9, 11. The frame element 7, which also rests against the skin in the area of the curvature or the corner, also protrudes between the two support elements 1, 3 further into the hole 15 than the bearing surfaces 9, 11. This equally results in several advantages.

For one thing, in the corners or in sections in which the circumferential edge 17 is curved, this is also protected from damage by objects which are transported through the hole 15. The protection in the corners is particularly important because the material of the skin 5 is strongly pre-stressed here and cracks form particularly easily, which migrate a long way through the skin 5 and entail expensive repairs. If, instead of the skin 5, the frame element 7 is damaged and a crack forms in the frame element 7, this crack is limited to the frame element 7. It can be easily replaced without the skin 5 being damaged. In addition, the radius of curvature in the frame element 7 is smaller than the radius of curvature of the circumferential edge 17. However, the smaller the radius of curvature is, the greater the stress, and thus the risk of cracks, is in an edge 17. When a frame element 7 is used, the radius of curvature of the circumferential edge 17 of the skin 5 can be chosen larger and the risk of cracks is further reduced.

In an exemplary embodiment, the skin 5 is formed from carbon fibre reinforced plastic (CFRP) and the frame element 7 is formed from titanium. In an alternative preferred embodiment, the skin 5 is formed from glass fibre reinforced aluminium (GLARE) and the frame element 7 is formed from aluminium. In a further alternative embodiment, both the skin 5 and the frame element 7 are formed from aluminium.

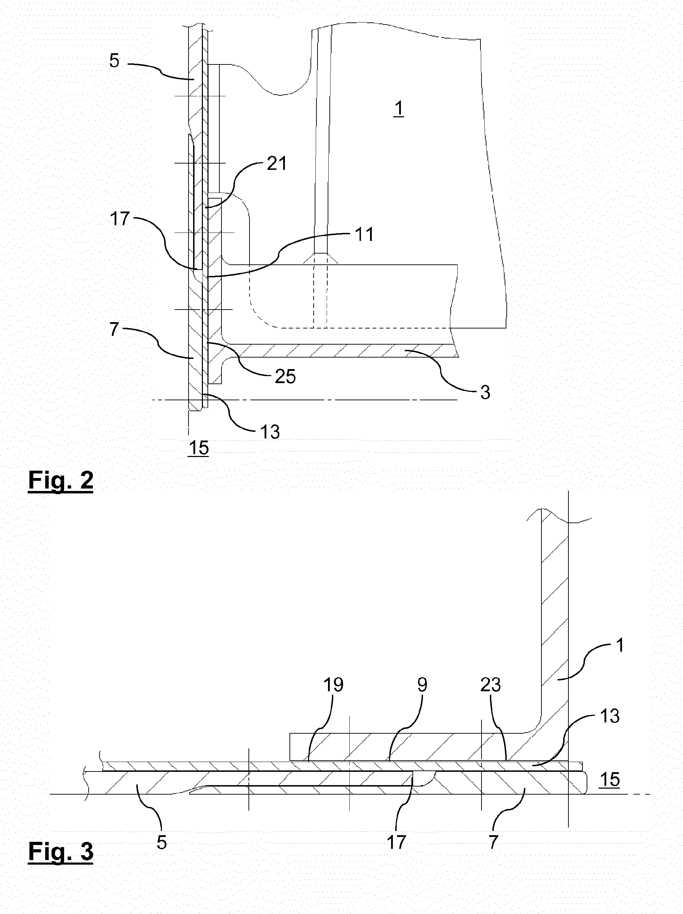

In Figures 2 and 3, the transition between the frame element 7 and the skin 5 is shown in cross-section. As shown there, the thickness of the skin 5 decreases in a direction facing the hole 15. It is preferred that the skin 5 is formed from a composite material which has a first and a second outer layer and several layers arranged between the outer layers. In the area in which a thickness of the skin 5 is smaller, the skin 5 has fewer layers than in an area in which the thickness of the skin 5 is larger. However, the outer layers run continuously.

Conversely, the frame element 7 has an area of a smaller thickness, wherein the thickness decreases in a direction facing away from the hole 15. The areas of smaller thickness of the skin 5 and of the frame element 7 overlap such that a lap joint is formed between the skin 5 and the frame element 7. However, the surfaces of the skin 5 and of the frame element 7 facing away from the support element 1, 3 run in a common plane. The frame element 7 is preferably arranged on the side of the joint facing away from the support elements 1, 3, in order that the forces which could act on the frame element 7 in the case of damage are diverted outwardly, and the frame element is not pushed between the skin 5 and the bearing surfaces 9, 11, thus detaching the skin 5 from the bearing surfaces 9, 11.

As can additionally be seen from Figures 2 and 3, the frame element 7 and the skin 5 line up precisely in the preferred embodiment on the side facing onto the support elements 1, 3 and also on the side facing away from the support elements 1, 3. In other words, the skin 5 and the frame element 7 have the same thickness in the areas in which they are not thinned. Accordingly, the common thickness of the skin 5 and of the frame element 7 in the area of the joint is chosen such that it corresponds to the thickness of the skin 5 or of the frame element. The frame elements 7 can hereby be particularly easily processed and unevennesses on the surface of the vehicle, which could have a negative effect on the hydrodynamic properties of the vehicle, are avoided.

## Claims

1. Vehicle with a skin (5), which has a hole (15) with a circumferential edge (17), and with a structure formed from a plurality of support elements (1, 3), on which structure the skin (5) is arranged,
**characterized in that**
a first support element (1) of the plurality of support elements (1, 3) has a first bearing surface (9) with a first and a second section (19, 23), wherein the skin (5) is arranged flat against the first section (19) of the first bearing surface (9) and wherein the circumferential edge (17) runs at least in sections in the area of the first bearing surface (9), and
an integrally formed frame element (7) is arranged flat against the second section (23) of the first bearing surface (9) and, in the area of the first bearing surface (9), is arranged against the skin (5).

2. Vehicle according to claim 1, **characterized in that** the plurality of support elements (1, 3) comprises a second support element (3) which is arranged at an angle to the first support element (1) and has a bearing surface (11) with a third and a fourth section (21, 25), wherein the skin (5) is arranged flat against the third section (21) and wherein the circumferential edge (17) runs at least in sections in the area of the second bearing surface (9),
that the circumferential edge (17) runs in different directions in the area of the first bearing surface (9) and of the second bearing surface (11),
that the frame element (7) is arranged flat against the fourth section (25) of the second bearing surface (11) and, in the area of the second bearing surface (11), is arranged against the skin (5), and
that the frame element (7) protrudes between the first and the second bearing surface (9, 11) further into the hole (15) than the first and the second bearing surface (9, 11).

3. Vehicle according to claim 1 or 2, **characterized in that** the frame element (7) overhangs the first and/or the second bearing surface (9, 11) in a direction facing away from the circumferential edge (17).

4. Vehicle according to one of the preceding claims, **characterized in that** the frame element (7) and the skin (5) line up precisely on the side facing away from the first and/or the second support element (1, 3) and/or
that the frame element (7) and the skin (5) line up precisely on the side facing onto the first and/or the second support element (1, 3).

5. Vehicle according to one of the preceding claims, **characterized in that** the frame element (7) rests against the entire circumferential edge (17).

6. Vehicle according to one of the preceding claims, **characterized in that** a doubler (13) is arranged between the first and/or the second bearing surface (9, 11) and the skin (5) as well as between the first and/or the second bearing surface (9, 11) and the frame element (7).

7. Vehicle according to one of the preceding claims, **characterized in that** the skin (5) and the frame element (7) at least partially overlap in the area of the first and/or of the second bearing surface (9, 11).

8. Vehicle according to claim 7, **characterized in that** a thickness of the skin (5) decreases in a direction facing onto the hole (15).

9. Vehicle according to claim 7 or 8, **characterized in that** a thickness of the frame element (7) decreases in a direction facing away from the hole (15).

10. Vehicle according to one of the preceding claims, **characterized in that** the skin (5) is formed from a composite material.

11. Vehicle according to claim 10, if dependent on claim 8, **characterized in that** the composite material has a first and a second cover layer, between which a plurality of intermediate layers are arranged, and
that the number of intermediate layers decreases in the direction facing onto the hole (15).

12. Vehicle according to one of the preceding claims, **characterized in that** the frame element (7) is formed from a metal or from a metal alloy.

13. Vehicle according to one of the preceding claims, **characterized in that** the skin (5) comprises a carbon fibre reinforced plastic and the frame element (7) comprises titanium.

14. Vehicle according to one of the preceding claims, **characterized in that** the skin (5) comprises a glass fibre reinforced aluminium and the frame element (7) comprises aluminium.

15. Vehicle according to one of the preceding claims, **characterized in that** the vehicle is an aircraft.
